# EUROPEAN PATENT APPLICATION

(11) **EP 4 550 769 A1**
(43) Date of publication of application: **07.05.2025**
(21) Application number: 23830096.6
(22) Date of filing: 21.06.2023
(51) Int. Cl.: H04N 1/00

(54) **SCANNER BASE AND SCANNER**

(30) Priority: 30.06.2022 CN 202210772652
(71) Applicant: Shining 3D Tech Co., Ltd., Hangzhou, Zhejiang 311258 (CN)
(72) Inventor: PAN, Linjie, Hangzhou, Zhejiang 311258 (CN); YE, Zi, Hangzhou, Zhejiang 311258 (CN); LUO, Yifeng, Hangzhou, Zhejiang 311258 (CN); CHEN, Guizhong, Hangzhou, Zhejiang 311258 (CN); SONG, Ze, Hangzhou, Zhejiang 311258 (CN)
(74) Representative: Zaboliene, Reda
(86) International application number: PCT/CN2023/101831
(87) International publication number: WO 2024/001917

(57) **Abstract**

The present disclosure relates to a scanner base and a scanner. The scanner base includes a central transmission component, which is used for connecting to terminal devices, where the terminal devices at least comprise a PC and a scanner, and the scanner and the PC perform data transmission through the central transmission component. On the basis of the scanner base, when the scanner is placed on the scanner base, data intercommunication between the scanner and the PC can be realized for data transmission, such that a requirement of a user for performing data transmission when the scanner is placed on the base is met.

## Description

The present disclosure claims the priority of the Chinese patent application filed with the China Patent Office on June 30, 2022, with application number 202210772652.1 and invention name "Scanner Base and Scanner", the entire contents of which are incorporated by reference in the present disclosure.

### TECHNICAL FIELD

The present disclosure relates to a technical field of scanners, and in particular to a scanner base and a scanner.

### BACKGROUND

A small scanner such as an intraoral scanner is usually equipped with a scanner base. When the scanner is not in use, a user can place the scanner on the scanner base, which can fix and support the scanner. Traditional scanner bases can only provide support and fixation functions. Some existing scanner bases may also be equipped with a function of charging the scanner, but for the user, a function of the scanner base is still too single and cannot meet more needs of the user.

### SUMMARY

### (I) A technical problem to be resolved.

The technical problem to be solved by the present disclosure is a problem that the function of the existing scanner base is too single and cannot meet more needs of the user.

### (II) Technical solution.

In order to solve the above technical problems, the embodiments of the present disclosure provide a scanner base and a scanner.

In a first aspect, the present disclosure provides a scanner base, the base includes:
A central transmission component being configured to connect a plurality of terminal devices, and the terminal devices at least include a personal computer (PC) and a scanner; the scanner and the PC transmitting data through the central transmission component.

Optionally, the central transmission component is provided with a first data interface and a second data interface, and the base further includes a wireless transmission component;
The first data interface is connected to the PC, the second data interface is connected to the wireless transmission component, the central transmission component performs a wireless data transmission with the scanner through the second data interface and the wireless transmission component, and the PC performs a data transmission with the central transmission component through the first data interface.

Optionally, the central transmission component is further provided with a third data interface;
The third data interface is configured to connect to the scanner, and the central transmission component performs a wired data transmission with the scanner via the third data interface.

Optionally, the central transmission component also includes a mode switching subcomponent, which is configured to respond to a control command of the PC to change a wireless transmission mode to a wired transmission mode, or change the wired transmission mode to the wireless transmission mode; the wireless transmission mode is a transmission mode in which the central transmission component performs the wireless data transmission with the scanner through the second data interface and the wireless transmission component, and the wired transmission mode is a transmission mode in which the central transmission component performs the wired data transmission with the scanner through the third data interface.

Optionally, the central transmission component is further provided with a fourth data interface, and the terminal device further comprises a calibrator;
The fourth data interface is configured to connect to the calibrator, and the central transmission component performs a wired data transmission with the calibrator via the fourth data interface.

Optionally, the wireless transmission component includes a wireless network control subcomponent, a wireless network access subcomponent and a wireless antenna subcomponent;
The wireless network access subcomponent is connected to the wireless network control subcomponent and is connected to the wireless antenna subcomponent.

Optionally, the wireless control subcomponent includes an Ethernet controller, the wireless network access subcomponent includes a wireless access point, and the wireless antenna subcomponent includes wireless antennas;
A number of the wireless antennas is greater than or equal to two.

Optionally, interface types of data interfaces comprise at least a type-A, a type-B, and a type-C, and interface types of the first data interface, the third data interface and the fourth data interface are different from each other and are selected from the type-A, the type-B and the type-C.

Optionally, the base further includes:
A charging control component;
One end of the charging control component being connected to a power adapter, and the other end being connected to the scanner; the charging control component being configured to convert a level received from the power adapter to a level suitable for the scanner to charge the scanner.

Optionally, the scanner base further includes a shell, the shell is provided with a placement groove matching a shape of the scanner, and the placement groove is configured to place the scanner.

In a second aspect, the present disclosure further provides a scanner adapted to the scanner base provided in the first aspect.

### (III) Beneficial effects

The above technical solutions provided by the embodiments of the present disclosure have following advantages compared with the prior art:
The scanner base provided in this public embodiment includes the central transmission component, which is configured to connect the terminal devices, and the terminal devices include at least a PC and a scanner, and the scanner and the terminal devices transmit data through the central transmission component. Based on this scanner base, when the scanner is placed on the scanner base, a data communication and a data transmission between the scanner and the PC can be achieved, which meets the user's need for data transmission when the scanner is placed on the base.

It is to be understood that the foregoing general description and the following detailed description are exemplary and explanatory only and are not limiting the present disclosure.

### BRIEF DESCRIPTION OF THE DRAWINGS

The accompanying drawings, which are incorporated in and constitute a part of this specification. The accompanying drawings illustrate embodiments consistent with the present disclosure and are configured to explain principles of the present disclosure together with the description.

In order to more clearly illustrate the embodiments of the present invention or technical solutions in the prior art, the drawings required for use in the embodiments or the description of the prior art will be briefly introduced below. Obviously, for the skilled in the art, other drawings can be obtained based on these drawings without paying any creative work.

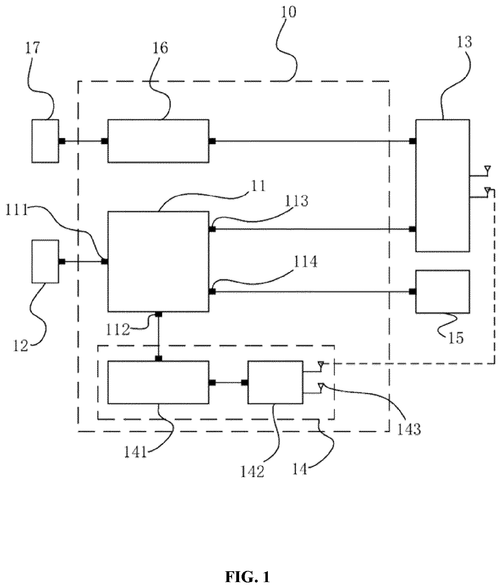

FIG. 1 is a schematic diagram of a structure of a scanner base provided by one embodiment of the present disclosure.

### DETAILED DESCRIPTION

In order to make the purpose, technical solutions and advantages of the embodiments of the present disclosure clearer, the technical solutions in the embodiments of the present disclosure will be clearly and completely described below. Obviously, the described embodiments are part of the embodiments of the present disclosure, not all of the embodiments. Based on the embodiments in the present disclosure, all other embodiments obtained by the skilled in the art without paying creative work are within a scope of protecting the present disclosure.

FIG. 1 is a schematic diagram of a structure of a scanner base provided by one embodiment of the present disclosure, the base includes:
A central transmission component 11 is configured to connect a plurality of terminal devices. The terminal devices at least include a personal computer (PC) 12 and a scanner 13. The scanner 13 and the PC 12 perform a data transmission through the central transmission component 11.

Specifically, in order to satisfy a requirement that the scanner 13 can transmit data through a scanner base, the central transmission component 11 can be set. Through the central transmission component 11, the PC 12 can transmit data with the scanner 13, for example, data scanned by the scanner can be transmitted to the PC. The central transmission component 11 can be a USB hub. The scanner base is represented by 10 in FIG. 1.

Based on the scanner base, the scanner 13 realizes the data transmission between the scanner 13 and the PC 12 through the scanner base, thereby meeting a demand of a user for transmitting data from the scanner 13 to the PC 12.

Continuing to refer to FIG. 1, in some embodiments, the central transmission component 11 is provided with a first data interface 111 and a second data interface 112, and the base further includes a wireless transmission component 14.

The first data interface 111 is connected to the PC 12, the second data interface 112 is connected to the wireless transmission component 14, the central transmission component 11 transmits wireless data with the scanner 13 through the second data interface and the wireless transmission component 14, and the PC 12 transmits data with the central transmission component 11 through the first data interface 111.

In order to realize a function of the wireless data transmission with the scanner 13, the wireless transmission component 14 can be set. After the PC 12 transmits data to the central transmission component 11 through the first data interface 111, the central transmission component 11 can transmit the data to the wireless transmission component through the second data interface 112. The wireless transmission component 14 transmits the data to the scanner 13 in a wireless manner, or the scanner 13 transmits data to the central transmission component 11 in the wireless manner through the wireless transmission component 14, and then the data is transmitted to the PC 12. Among them, the first data interface 111 connects the PC 12 and the central transmission component 11, and the second data interface 112 is configured to connect the central transmission component 11 and the wireless transmission component 14. More specifically, in an actual implementation process, the first data interface 111 can be a mother interface, and a sub-interface can also be set on the PC 12. The sub-interface and the mother interface are connected by a data transmission cable, and a principle of the second data interface 112 is the same as the first data interface 111.

Through the above configuration, the wireless data transmission between the central transmission component 11 and the scanner 13 can be realized.

Continuing to refer to FIG. 1, in some embodiments, the wireless transmission component 14 includes a wireless network control subcomponent 141, a wireless network access subcomponent 142, and a wireless antenna subcomponent 143.

The wireless network access subcomponent 142 is connected to the wireless network control subcomponent 141 and is connected to the wireless antenna subcomponent 143.

In some embodiments, the wireless control subcomponent 141 includes an Ethernet controller, the wireless network access subcomponent 142 includes a wireless access point, and the wireless antenna subcomponent 143 includes wireless antennas.

A number of wireless antennas is greater than or equal to two.

During a process of the wireless data transmission between the scanner and the wireless transmission component 14, the wireless transmission component 14 can receive data signal from the scanner 13 through the wireless antennas and transmit the data signal to the Ethernet controller through the wireless access point. At this time, the data signal is transmitted through an Ethernet bus. The Ethernet controller can convert the Ethernet bus into a USB bus for the data transmission with the central transmission component 11, thereby transmitting data from the scanner 13 to the central transmission component 11 and finally to the PC 12, or transmitting data from the PC 12 to the central transmission component 11 and finally to the scanner 13. This process is opposite to a process of transmitting data from the scanner 13 to the central transmission component 11 and finally to the PC 12.

By setting up multiple wireless antennas, a stability of the function of the wireless data transmission can be guaranteed.

Through the above configuration, the function of the wireless data transmission between the scanner and the central transmission component 11 can be realized.

Continuing to refer to FIG. 1, in some embodiments, the central transmission component 11 is further provided with a third data interface 113.

The third data interface 113 is configured to connect to the scanner 13, and the central transmission component 11 performs a wired data transmission with the scanner 13 through the third data interface 113.

Specifically, the wired data transmission with the scanner 13 can be achieved through the third data interface 113. The third data interface 113 can be a backup interface. When it is possible to perform the process of the wireless data transmission with the scanner 13 through the wireless transmission component 14, the wireless data transmission with the scanner 13 can be performed through the wireless transmission component 14 instead of performing the wired data transmission with the scanner 13 through the third data interface 113. More specifically, in an actual implementation process, the third data interface 113 can be a mother interface, and a sub-interface can also be set on the PC 12. The sub-interface and the mother interface are connected through a data transmission cable.

In some embodiments, the central transmission component 11 also includes a mode switching subcomponent (not shown), which is configured to respond to a control command of the PC 12 to change a wireless transmission mode to a wired transmission mode, or change the wired transmission mode to the wireless transmission mode. The wireless transmission mode is a transmission mode in which the central transmission component 11 performs the wireless data transmission with the scanner 13 through the second data interface 112 and the wireless transmission component 14. The wired transmission mode is a transmission mode in which the central transmission component 11 performs the wired data transmission with the scanner 13 through the third data interface 113.

Specifically, for example, in a process of using the scanner base for data transmission, the function of the wireless data transmission may be obstructed or damaged, that is, the wireless data transmission cannot be performed with the scanner 13 through the wireless transmission component 14. When the PC 12 cannot receive data from the scanner 13 within a certain time duration or the PC 12 cannot send data to the scanner 13 for a certain time duration, the function of the wireless data transmission being failed can be determined. At this time, the PC 12 can control the mode switching subcomponent to change the wireless transmission mode to the wired transmission mode. In some other embodiments, the mode switching subcomponent may also be set in the PC 12, but the scanner base provided in this embodiment can still realize the above-mentioned function of changing the wireless transmission mode to the wired transmission mode, or changing the wired transmission mode to the wireless transmission mode.

Through the above configuration, even if the wireless transmission mode fails and the wireless data transmission cannot be performed, it can be adjusted to the wired transmission mode and continue to realize the data transmission between the PC 12 and the scanner 13 through the wired data transmission mode, thereby ensuring a reliability of data transmission.

Continuing to refer to FIG. 1, in some implementation modes, the central transmission component 11 is further provided with a fourth data interface 114, and the terminal device further includes a calibrator 15.

The fourth data interface 114 is configured to connect to the calibrator 15, and the central transmission component 11 performs a wired data transmission with the calibrator 15 via the fourth data interface 114.

In order to enable the scanner base to have a function of calibrating the scanner, the central transmission component 11 can also be provided with the fourth data interface 114. When the scanner 13 needs to be calibrated, the fourth data interface 114 can be connected to the calibrator 15. After receiving an instruction to calibrate the scanner 13, the calibrator 15 can transmit calibration data to the central transmission component 11 through the fourth data interface 114, and then transmit the calibration data to the PC 12 through the first data interface 111. After receiving the calibration data, the PC 12 can transmit the calibration data to the central transmission component 11 through the first data interface 111, and then transmit the calibration data to the wireless transmission component 14 through the second transmission interface 112, and finally transmit the calibration data to the scanner 13 through the wireless transmission component 14, or transmit the calibration data to the scanner 13 through the third data interface 113, thereby finally realizing a calibration of the scanner 13.

Through the above configuration, the scanner 13 can be calibrated through the scanner base.

In some embodiments, interface types of data interfaces include at least a type-A, a type-B, and a type-C, and interface types of the first data interface 111, the third data interface 113 and the fourth data interface 114 are respectively one of type-A, type-B and type-C and are different from each other.

In order to avoid a mis-insertion of each interface, interface types of the first data interface 111, the third data interface 113 and the fourth data interface 114 can be set to be different from each other, for example, the interface type of the first data interface 111 is type-A, the interface type of the third data interface 113 is type-B, the interface type of the fourth data interface 114 is type-C, and so on. The type-A, type-B and type-C represent different USB interface types, and there are differences in interface shapes between different interface types. Since the interface shapes of different interface types are different, the mis-insertion by the user can be avoided. Since the wireless transmission component 14 generally does not need to be plugged in and out in actual scenarios, an interface type of the wireless transmission component 14 is not limited in the present embodiment.

Continuing to refer to FIG. 1, in some embodiments, the base further includes:
A charging control component 16.

One end of the charging control component 16 is connected to a power adapter 17, and the other end is connected to the scanner 13. The charging control component 16 is configured to convert a voltage level received from the power adapter 17 to a voltage level suitable for the scanner 13, so as to charge the scanner 13.

In order to realize a charging function of the scanner by the scanner base, the charging control component 16 can be provided, through which the one end of the charging control component 16 is connected to the power adapter 17, and the other end is connected to the scanner 13. When in use, the power adapter 17 is connected to a power supply, and a level in the power supply is transmitted to the charging control component 16. The charging control component 16 can convert the level in the power supply into the level suitable for the scanner. For example, if the level in the power supply is 12V DC, and the level suitable for the scanner is 5V DC, the charging control component 16 can convert the 12V DC into 5V DC and charge the scanner 13. Specifically, in order to make a connection between the scanner base and the scanner 13 more concise, a connection between the charging control component 16 and the scanner 13 can be through contact points. As another possible implementation, the other end of the charging control component can also be connected to a wireless charging coil, and the wireless charging coil can be configured to realize wireless charging of the scanner 13.

Through the above configuration, the scanner base can realize the charging function of the scanner 13.

In some embodiments, the scanner base further includes a shell, and the shell is provided with a placement groove matching a shape of the scanner 13, and the placement groove is configured to place the scanner 13.

Specifically, in order to place the scanner 13, the placement groove, such as a groove, can be set on the scanner base. A shape of the groove matches the shape of the scanner 13. In addition, the contact points in the above embodiment can also be set at a bottom of the placement groove. In this way, the scanner can realize the charging function when placed on the scanner base. In addition, the central transmission component 11 and the charging control component 16 in the above embodiment can also be set inside the shell.

Through the above configuration, the scanner can be stably placed on the scanner base, thereby achieving a stable placement of the scanner.

The disclosed embodiment also provides a scanner, which is adapted to the scanner base in the above-mentioned embodiment.

Specifically, in order to enable the scanner to adapt to the above-mentioned scanner base, the scanner can also be provided with a wireless antenna for wireless data transmission with the wireless antenna in the scanner base. In addition, the scanner can also be configured with a shell shape that is adapted to the scanner base so that the scanner can be stably placed on the scanner base. For a sake of brevity, no further details will be given here.

The scanner provided in the embodiment of the present disclosure can achieve technical effects similar to those of the above-mentioned scanner base. That is, since the scanner is the scanner mentioned in the above embodiments of the scanner base, the scanner provided in the embodiment of the present disclosure can realize functions such as charging, data transmission and calibration when placed on the scanner base, thereby meeting more user needs.

It should be noted that, in this article, relational terms such as "first" and "second" are only used to distinguish one entity from another entity or distinguish one operation from another operation, and do not necessarily require or imply any such actual relationship or order between these entities or operations. Moreover, the terms "include", "comprise" or any other variants thereof are intended to cover non-exclusive inclusion, so that a process, a method, an article or a device including a series of elements includes not only those elements, but also other elements not explicitly listed, or also includes elements inherent to such process, method, article or device. In the absence of further restrictions, the elements defined by the sentence "comprise a..." do not exclude an existence of other identical elements in the process, method, article or device including the elements.

The above description is only a specific embodiment of the present disclosure, so that those skilled in the art can understand or implement the present disclosure. Various modifications to these embodiments will be apparent to those skilled in the art, and general principles defined herein can be implemented in other embodiments without departing from the spirit or scope of the present disclosure. Therefore, the present disclosure will not be limited to the embodiments shown herein, but will conform to the widest scope consistent with the principles and novel features disclosed herein.

### Industrial Applicability

The scanner base provided in this public embodiment can realize data communication and data transmission between the scanner and the PC when the scanner is placed on the scanner base, thereby meeting the user's needs for data transmission when the scanner is placed on the base and having strong industrial practicality.

## Claims

1. A scanner base, comprising:
a central transmission component, which is configured to connect a plurality of terminal devices, the terminal devices at least comprising a personal computer (PC) and a scanner, the scanner and the PC performing a data transmission through the central transmission component.

2. The scanner base according to claim 1, wherein the central transmission component is provided with a first data interface and a second data interface, and the base further comprises a wireless transmission component;
the first data interface is configured to connect to the PC, the second data interface is connected to the wireless transmission component, the central transmission component performs a wireless data transmission with the scanner through the second data interface and the wireless transmission component, and the PC performs a data transmission with the central transmission component through the first data interface.

3. The scanner base according to claim 2, wherein the central transmission component is further provided with a third data interface;
the third data interface is configured to connect to the scanner, and the central transmission component performs a wired data transmission with the scanner through the third data interface.

4. The scanner base according to claim 3, wherein the central transmission component further comprises a mode switching subcomponent, which is configured to respond to a control command of the PC to change a wireless transmission mode to a wired transmission mode, or to change the wired transmission mode to the wireless transmission mode; the wireless transmission mode is a transmission mode in which the central transmission component performs the wireless data transmission with the scanner through the second data interface and the wireless transmission component, and the wired transmission mode is a transmission mode in which the central transmission component performs the wired data transmission with the scanner through the third data interface.

5. The scanner base according to claim 2, wherein the central transmission component is further provided with a fourth data interface, and the terminal device further comprises a calibrator;
the fourth data interface is configured to connect to the calibrator, and the central transmission component performs a wired data transmission with the calibrator through the fourth data interface.

6. The scanner base according to claim 2, wherein the wireless transmission component comprises a wireless network control subcomponent, a wireless network access subcomponent and a wireless antenna subcomponent;
the wireless network access subcomponent is connected to the wireless network control subcomponent and the wireless antenna subcomponent.

7. The scanner base according to claim 6, wherein the wireless control subcomponent comprises an Ethernet controller, the wireless network access subcomponent comprises a wireless access point, and the wireless antenna subcomponent comprises wireless antennas;
a number of the wireless antennas is greater than or equal to two.

8. The scanner base according to any one of claims 2 to 5, wherein interface types of data interfaces comprise at least a type-A, a type-B, and a type-C, and interface types of the first data interface, the third data interface and the fourth data interface are different from each other and are selected from the type-A, the type-B and the type-C.

9. The scanner base according to claim 1, further comprising:
a charging control component;
one end of the charging control component being connected to a power adapter, and the other end being connected to the scanner; the charging control component being configured to convert a level received from the power adapter to a level suitable for the scanner to charge the scanner.

10. The scanner base according to claim 1, further comprising a shell, the shell being provided with a placement groove matching a shape of the scanner, and the placement groove being configured to place the scanner.

11. A scanner, wherein the scanner is adapted to the scanner base as claimed in any one of claims 1 to 10.
